# EUROPEAN PATENT SPECIFICATION

(11) **EP 0 622 520 B1**
(45) Date of publication and mention of the grant of the patent: **05.08.1998**
(21) Application number: 94301918.2
(22) Date of filing: 17.03.1994
(51) Int. Cl.: E21B 33/04

(54) **Annular sealing assembly**
Ringförmige Dichtungsanordnung
Ensemble d'étanchéité annulaire

(30) Priority: 26.04.1993 US 52777
(43) Date of publication of application: 02.11.1994
(73) Proprietor: Cooper Cameron Corporation, Houston, Texas 77027 (US)
(72) Inventor: Turner, Edwin Carroll, Houston, Texas 77040-6431 (US)
(74) Representative: Jackson, Peter Arthur

(56) References cited:
- EP-A- 0 495 274
- GB-A- 2 180 016
- GB-A- 2 193 520
- US-A- 4 900 041
- US-A- 5 031 923

## Description

The present invention relates to an improved annular seal which has particular application to sealing across annular spaces between facing cylindrical surfaces, such as the annular seal between the exterior of a hanger and the surrounding housing in a well. The prior annular seals have used annular seals having a U-shaped section with expander rings positioned in the space between the two legs of the ring to either mechanically or responsive to pressure urge the expander ring inwardly of the legs to wedge them outward into sealing engagement with the facing cylindrical surfaces to effectively seal across the annulus between such surfaces.

U. S. Patent No. 3,288,472 to B. J. Watkins discloses a metal seal which includes a U-shaped ring having legs extending axially away from an annular base and tapering outwardly at an angle preferred to be approximately 2°. This provides an interference fit for the legs of the seal ring with respect to the surfaces against which they are to seal. U. S. Patent Nos. 3,378,269; 4,766,956; and 5,031,923 all disclose similar metal seals which include annular metal seal rings having a U-shaped section and having an interference fit with the surfaces against which they are to seal.

U. S. Patent No. 2,075,947 discloses a pipe joint which includes a soft metal seal ring having a pair of upwardly extending spaced legs and a pair of downwardly extending spaced legs with an annular hard metal wedging member positioned between each pair of legs and energized by the nut to be forced between the legs to urge the legs radially into sealing engagement with the outer and inner annular cylindrical surfaces against which they are to seal. Other prior art patents disclosing similar structures include U. S. Patent Nos. 3,915,462; 4,766,956; 4,900,041; and 5,044,672.

U. S. Patent No. 3,326,560 to N. D. Trbgovich discloses an adjustable annular seal which has a V shape and includes a split ring expander positioned between the diverging legs of the seal ring with suitable shoulders containing and urging the seal ring and expander together so that the expander urges the legs of the seal ring radially into sealing engagement with the annular walls against which it is to seal. The expander is described as being substantially coextensive in length with the sealing ring and being resiliently compressible for urging the walls (legs) apart to compensate for wear of the sealing portions. It is stated that the expander should be constrained from moving into engagement with the sealing surfaces and thus should not act as a sealing element itself. It should be noted that this patent specifically suggests the use of a split ring as the expander, it does not suggest any particular advantages. It could be that the advantage was that it was easier to install than a solid ring since it had to be assembled within the seal ring and in the space bounded by the sealing surfaces and the shoulders which urge the expander into the seal ring so that its sealing legs are urged toward the sealing surfaces.

The Lee Company manufactures hydraulic inserts or plugs which are adapted to be inserted into an opening to close and seal the opening. The Lee plug is cylindrical with a tapered reamed hole part way through its center and numerous small grooves in its exterior surface. It is used with a tapered pin which is driven into the reamed hole until the plug and pin are flush with each other. The pin wedges the tapered sides of the plug into biting engagement with the surrounding material forming independent seals and retaining rings. This plug does not have any use for sealing across an annulus.

An object of the present invention is to provide an improved sealing assembly for sealing across an annulus, such as between the interior of a well member and the exterior of a well hanger or other well member in a well, and requiring a minimum amount of settling load.

US-A-4900041 discloses an annular seal ring assembly for sealing across the annular space between an internal member having an outer cylindrical surface and an external member having an inner cylindrical surface, the assembly comprising an annular metal seal ring having an annular base with a pair of spaced apart legs extending from the annular base substantially in one direction and including a first leg and a second leg with an annular space between the legs; a plurality of segments positioned in the annular space between the legs, the segments substantially filling the annular space between the legs; and means for retaining the segments within the annular space between the legs. The seal assembly according to the present invention is distinguished from said known assembly insomuch the segments are arranged to transfer load between the legs, and the segments are all sufficiently short whereby they are not subject to hoop tension.

In its preferred form, the sealing ring assembly of the present invention, is adapted to provide a seal across the annular space between a first member and a second member. The improved seal includes an improved seal ring assembly which has an annular metal sealing ring with a U-shaped section and a plurality of segments positioned within the legs of the seal ring. The one of the legs has a taper sufficient to provide an interference fit with the surface against which it is to seal and the other leg extends generally perpendicularly to its base. The legs are connected with an annular base. The metal sealing ring is made of a soft steel and the insert segments are made from a ring of steel which is cut into segments by a suitable cutting method which has a minimum kerf. When assembled the segments are positioned between the legs of the sealing ring and the ring is then installed between the surfaces against which it is to seal. On installation between the surfaces against which it is to seal, one leg that is tapered is forced toward the segments and the segments transmit this force to the other leg so that they are both in sealing engagement with their respective sealing surfaces. The transmission of this force by the segments is not dependent on overcoming hoop tension in a ring since the ring has been cut into segments. The segments are cut from the ring with a minimum kerf at each cut so that they substantially fill the space between the legs completely around the annulus of the sealing ring.

In the accompanying drawings:

FIGURE 1 is a partial sectional view of the improved sealing ring assembly positioned between two tubular well members and showing its position immediately prior to being moved into its sealing position.

FIGURE 2 is a partial sectional view of the apparatus shown in FIGURE 1 but illustrating the sealing position of the sealing ring assembly against the sealing surfaces of the two tubular well members. The inner member which has an external taper has been moved downward with respect to the outer member and the sealing ring assembly.

FIGURE 3 is a partial sectional view of another form of the improved sealing ring assembly positioned between two tubular members immediately prior t being moved into its sealing position. In this form of the invention the sealing ring assembly is carried by the inner member and is moved downwardly within the outer member which has a tapered inner surface which moves the sealing ring assembly into set position.

FIGURE 4 is a partial sectional view of the form of the invention shown in FIGURE 3 after it has been moved to the set position of the sealing ring assembly.

FIGURE 5 is a partial sectional view of another form of the present invention which provides a seal between opposing faces of joined flanges.

FIGURE 6 is a sectional view of a sealing ring assembly having a modified U-shaped portion of a double sealing ring assembly.

FIGURE 7 is another sectional view of the U-shaped portion of another form of double sealing ring assembly.

FIGURE 8 is a partial sectional view of the preferred U-shaped sealing ring.

FIGURE 9 is a partial sectional view of the sealing ring shown in FIGURE 8 but enlarged to illustrate greater detail in its specific structure.

FIGURE 10 is a schematic sectional view to illustrate the position of the sealing ring assembly of the present invention as it enters the annulus between two surfaces.

FIGURE 11 is another schematic sectional view of the sealing ring assembly illustrated in FIGURE 10 after it has been moved into its original set position by the tapered surface of one of the surfaces.

FIGURE 12 is another schematic sectional view of the sealing ring assembly illustrated in FIGURES 10 and 11 but illustrating the position of the sealing ring assembly with respect to the two sealing surfaces after the ring has been exposed to pressure.

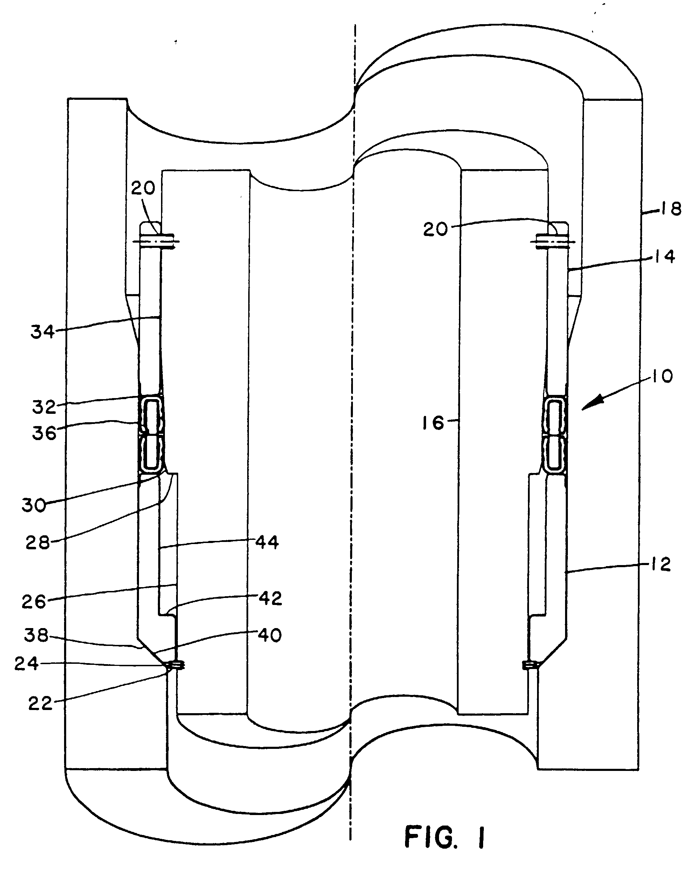

In FIGURE 1 the preferred form of the sealing ring assembly 10 of the present invention is shown carried between lower support ring 12 and upper sleeve 14. Inner member 16 is lowered into the interior of outer member 18 with sealing ring assembly supported thereon as shown. Upper sleeve 14 is releasably secured to inner member 16 by shear pins 20. Lower support ring 12 is supported on snap ring 22 mounted in groove 24 in the exterior of the portion of inner member 16 which is illustrated. The inner member has a lower surface 26 extending above snap ring 22 to downwardly facing shoulder 28. The lower outer corner of shoulder 28 is bevelled at 30 to allow ease of assembly of sealing ring assembly 10 thereon and surface 32 above bevel 30 is tapered upwardly and outwardly. Surface 32 thus provides the wedging surface to cause the setting of sealing assembly 10 as it reaches sealing inner member outer sealing surface 34 above surface 32. In its set position sealing ring assembly 10 provides a metal-to-metal seal against sealing surface 34 on the exterior of inner member 16 and sealing surface 36 on the interior of outer member 18. Lower support ring 12 has an external diameter to slide easily within surface 36 of outer member 18 and a lower tapered outer surface 38 which is adapted to engage upwardly facing tapered seat 40. The interior of the lower portion of lower support ring 12 fits easily around the exterior of inner member 16 and has internal upwardly facing shoulder 42 with rim 44 extending thereabove to engage the lower portion of sealing ring assembly 10 and having a radial thickness to fit around sealing surface 34 of inner member 16.

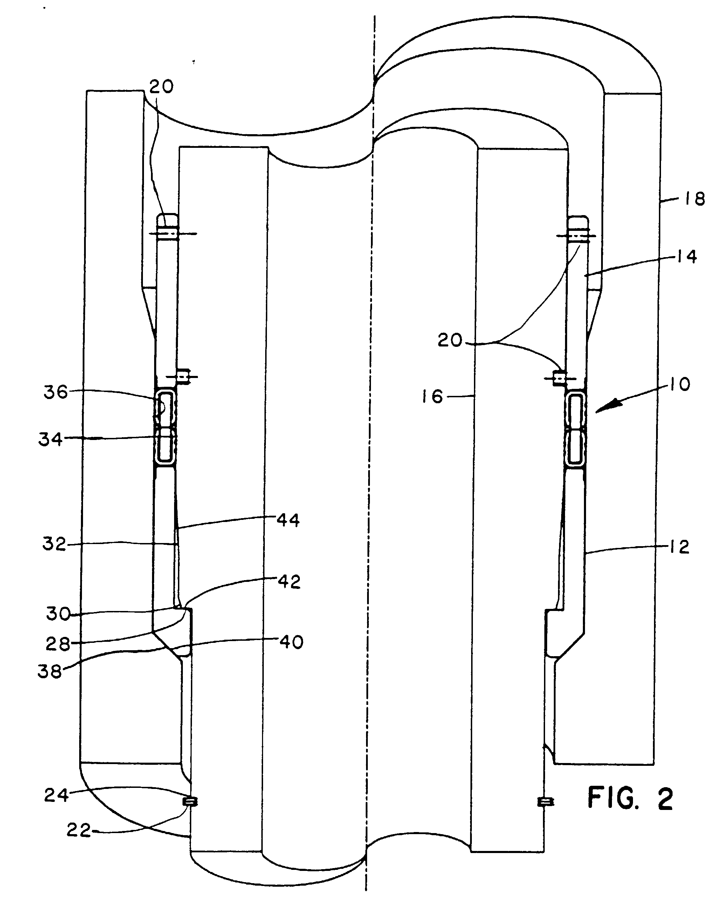

When lower support ring 12 lands on seat 40, the further downward movement of inner member 16 moves downward within the interior of rim 44 and tapered surface 32 moves downwardly through sealing ring assembly 10 to cause it to move to set position as shown in FIGURE 2, the details of which are more clearly set forth with respect to the description of the structure of sealing ring assembly.

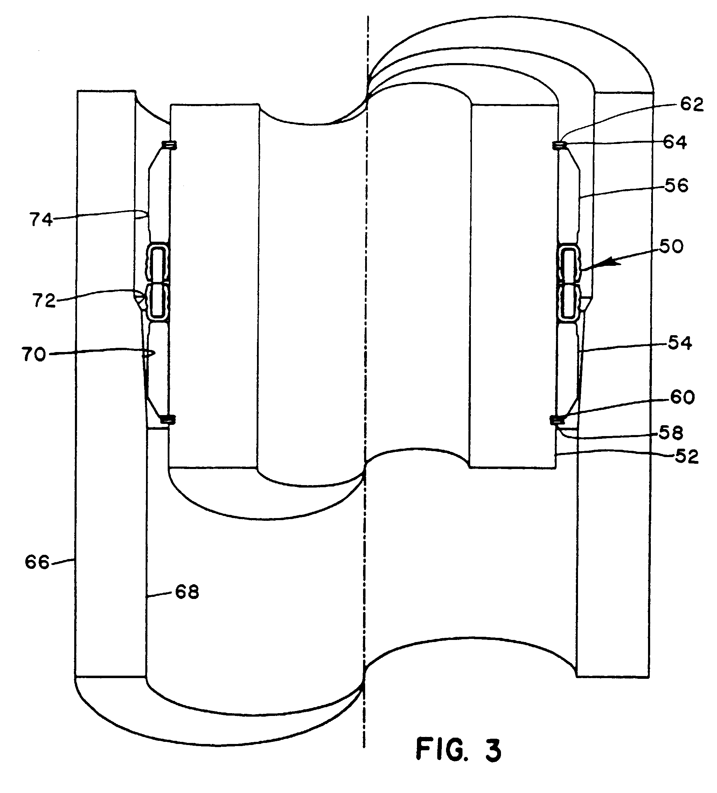

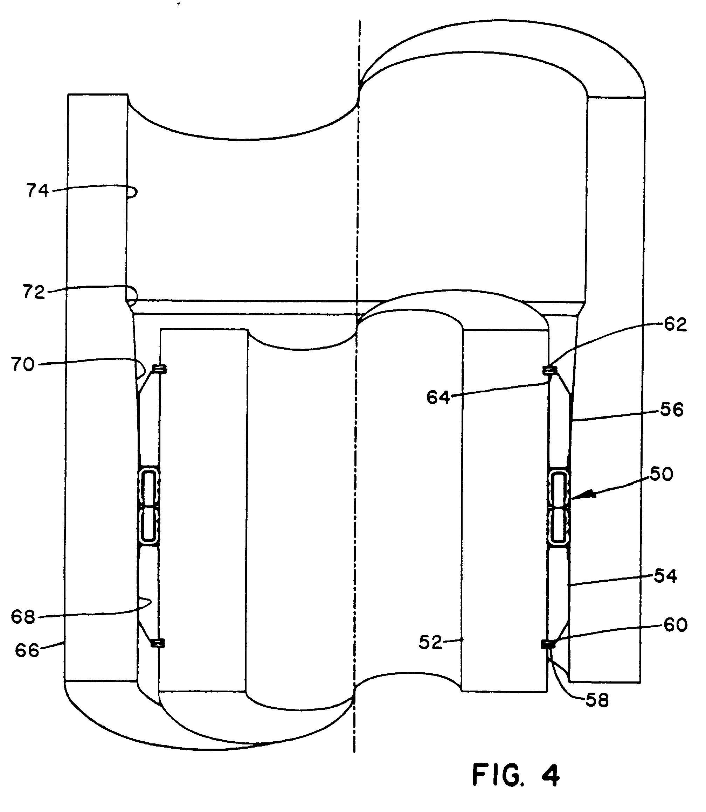

In a modified form of the present invention shown in FIGURES 3 and 4, sealing ring assembly 50 is supported on inner member 52 between lower support ring 54 and upper support ring 56. Snap ring 58 is positioned in groove 60 on the lower exterior of inner member 52 to prevent lower support ring 54 from moving downward on inner member and snap ring 62 positioned in groove 64 on the upper exterior of inner member 52 to prevent upper support ring 56 from being forced upwardly on inner member 52. Outer member 66 includes lower central bore 68 with outwardly and upwardly tapered setting bore 70 thereabove, outwardly and upwardly tapered bore above bore 70 and upper straight bore 72 extending thereabove.

The downward movement of sealing ring assembly 50 within outer member 66 is shown in the positions in FIGURES 3 and 4. In FIGURE 3 inner member 52 is moving downward within outer member 66 with sealing ring assembly 50 approaching tapered setting bore 70. In FIGURE 4, inner member has moved downwardly to the point that sealing ring assembly 50 is in sealing engagement with lower central bore 68 and thus provides a metal-to-metal sealing engagement against the exterior of inner member 52 and against the interior of outer member 66. This sealing engagement is hereinafter explained in detail.

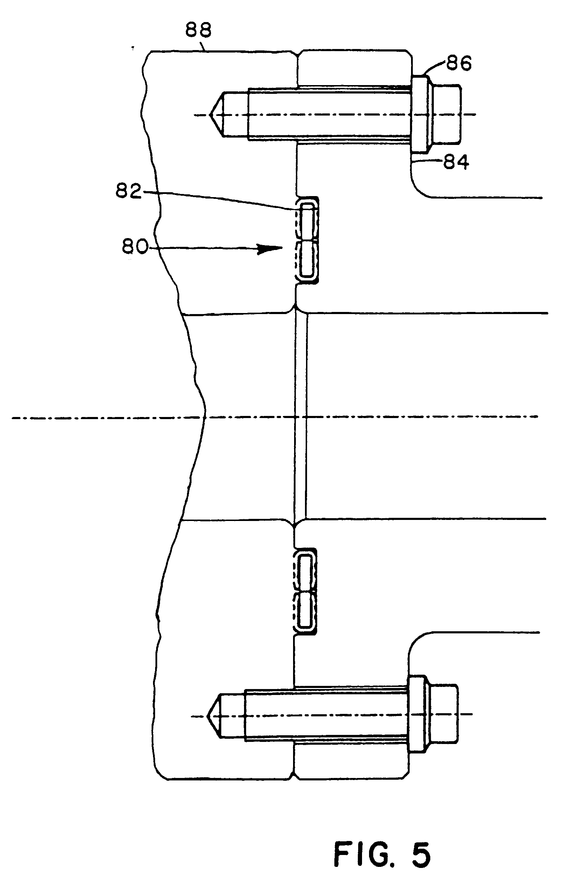

Another form of the present invention wherein the improved sealing ring assembly may be used is illustrated in FIGURE 5 wherein sealing ring assembly 80 is positioned in face groove 82 in flange 84. Flange 84 is secured by cap screws or other suitable fastening means 86 to a structure having a bore therethrough, such as flange 88. Sealing ring assembly 80 is initially positioned within groove 82 and as means 86 are tightened it is brought to its set position in sealing engagement between the face of flange 88 and the bottom of groove 82.

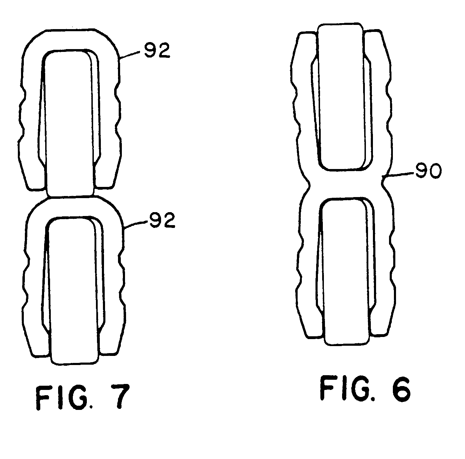

In the foregoing described installations of the improved sealing ring assembly of the present invention two rings have been used with the open ends of the U- shaped portions of the sealing ring were in facing opposed positions. As shown in FIGURES 6 and 7, the sealing ring may be used in other combinations, such as the double U-shaped ring 90 shown in FIGURE 6 and the two rings 92 facing in the same direction illustrated in FIGURE 7.

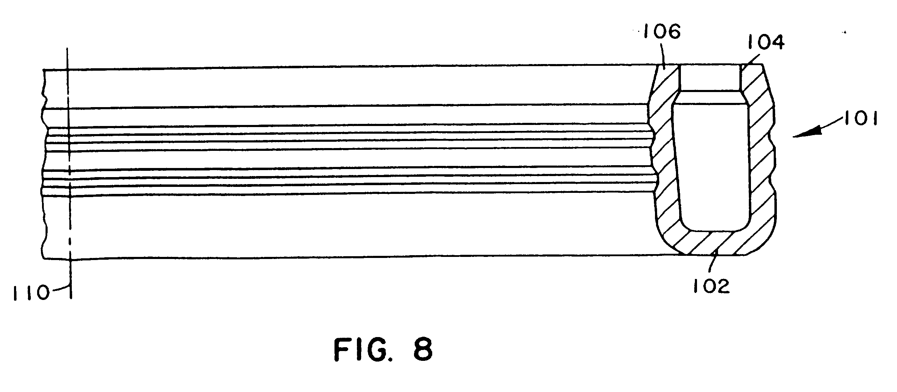

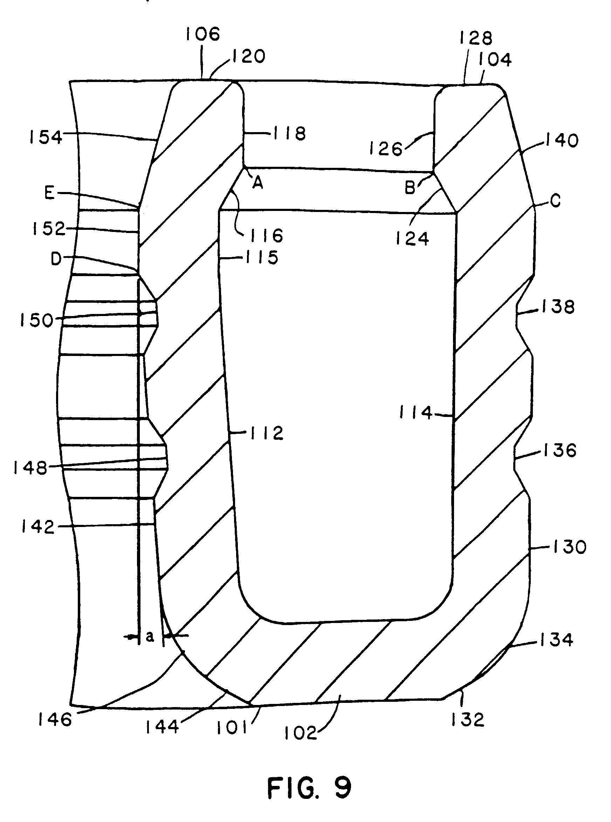

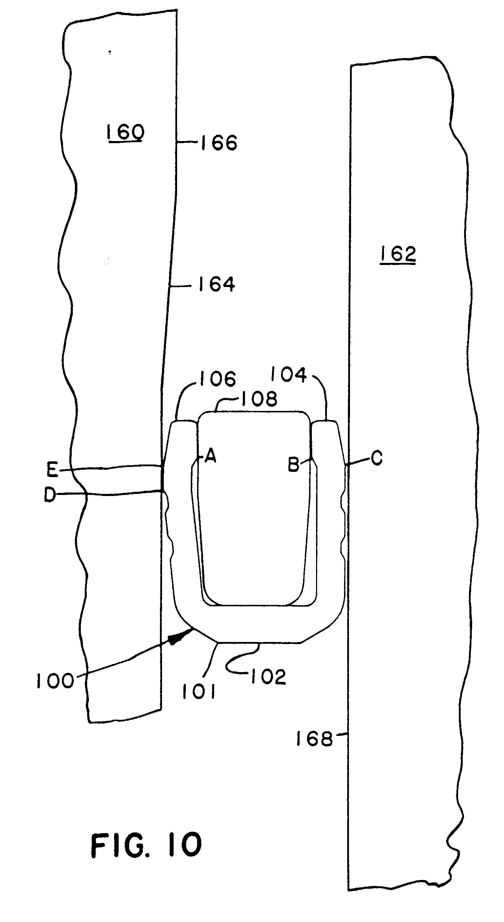

Improved sealing ring assembly 100 of the present invention includes a ring 101 having a base 102 and a pair of legs 104 and 106 extending generally perpendicular to the base, together with a plurality of segments 108 (not shown in FIGURES 8 and 9) but as hereinafter shown in detail in the drawings of FIGURES 10 through 12. Inner leg 106 extends from the inner portion of base 102 and outer leg 104 extends from the outer portion of base 102. Outer leg 104 extends substantially axially from base 102 as best seen in FIGURE 9 having its inner surface and its outer surfaces generally parallel to the centerline 110 of ring 101. Leg 106 is angled slightly with respect to centerline 110 so that it extends inwardly at an angle designated "a" in FIGURE 9 which is preferred to be approximately 4°. The outer surface 112 of leg 106 and inner surface 114 of leg 104 extend from rounded corners on base 102. Outer surface 112 of leg 106 is at an angle to centerline 110 as stated and ends in axial surface 115 which extends to tapered surface 116 which tapers toward leg 104 and ends at point A in outer surface 118 which extends to end surface 120 of leg 106. Inner surface 114 of leg 104 extends parallel to centerline 110 and terminates in tapered surface 124. Tapered surface ends at point B in axial surface 126 which extends to end surface 128 of leg 104. Exterior surface 130 of leg 104 extends from base 102 as surface 132 which is angled approximately 30° and rounded corner 134 to point C. Surface 130 is interrupted by grooves 136 and 138, both of which are formed by tapered surfaces and a flat base surface. Surface 140 extends from point C to end surface 128 as shown. Interior surface 142 of leg 106 extends from base 102 as surface 144 which is angled approximately 30° and rounded corner 146 to point D. Surface 142 is set at an angle to centerline 110 of approximately 4° and is broken by grooves 148 and 150 both of which are formed by tapered surfaces and a flat base surface as shown. Axial surface 152 extends from point D to point E and tapered surface 154 extends from point E to end surface 120.

As shown in FIGURE 10, improved sealing ring assembly 100 is positioned between two generally parallel walls of members 160 and 162. As hereinafter described, sealing ring assembly 100 is to provide an improved metal-to-metal seal between facing surfaces of such members. In the position illustrated in FIGURE 10, sealing ring assembly 100 has not been set in its sealing position but is ready to be moved on tapered surface 164 into its set position.

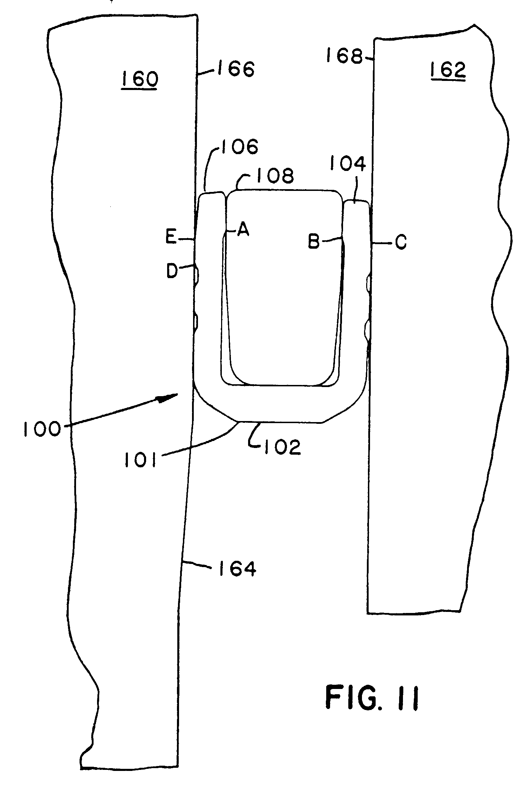

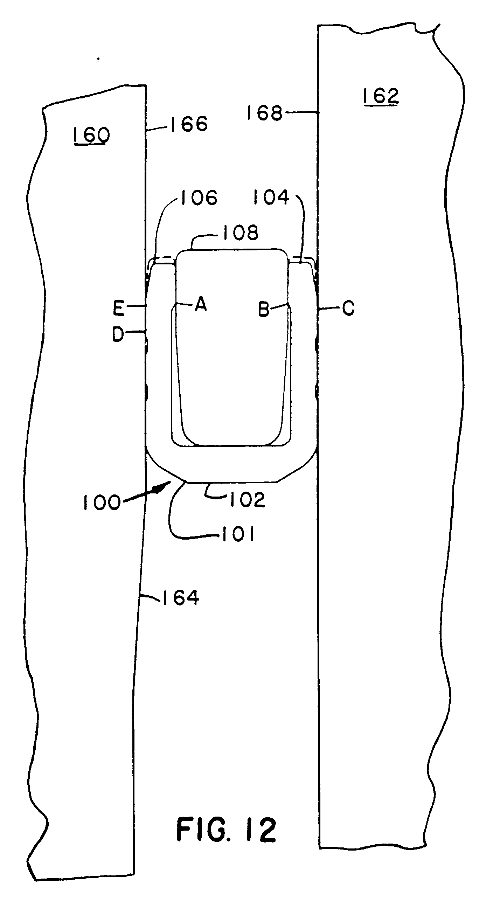

FIGURE 11 shows sealing ring assembly 100 positioned between sealing surface 166 on member 160 and sealing surface 168 on member 162. This may be done by movement of assembly 100 across tapered surface 164 to the position shown in FIGURE 11 or member 160 may be moved with respect to assembly 100. It should be noted that the tapered leg 106 of sealing ring 101 is the leg which engages the tapered surface for sealing. This is the arrangement by which either the inner or outer leg is tapered depending on whether the inner or outer member has the setting tapered surface. With sealing ring 100 assembly in set position, it is exposed to pressure from the open end of its legs and such pressure has the effect of moving sealing ring 101 to the position illustrated in FIGURE 12 wherein both legs 104 and 106 are held against their respective sealing surfaces 168 and 166 and segments 108 are generally centered within the space between legs 104 and 106.

With segments 108 positioned in the space between the legs of the sealing rings 101, segments 108 transmit loading between the legs but without having hoop tension to limit this transmission which would occur if the segments were a complete ring or a partial ring which might limit the transmission of the loading forces by a any hoop tension.

In the forms of the present invention the improved sealing is provided without dramatic increases in the loading of the sealing assembly. The use of the ring segments between the inner and outer legs provides adequate load transmission between the sealing ring legs without having to overcome the hoop tension which would be present if rings were used. The end loading on the segments is to ensure that they are properly positioned between the legs but not to wedge the legs apart as can be seen from FIGURE 12. The wedging for setting is provided by the tapered surfaced leading into one of the sealing surfaces which causes the leg having an angular position with respect to the other leg to be wedged toward the other leg cause the segments to transmit this to the other leg so that it is also initially loaded into sealing engagement with the sealing surface against which it is to seal. The amount of loading is thus only that loading which causes the sealing ring to move across the tapered setting surface so that the angled leg is moved sufficiently so that its movement is transmitted through the segments to the other leg to cause it to move into sealing engagement.

As described above, the points of contact between the legs and their sealing surfaces and the legs and their segments are offset a different distance from the ends of the legs, i. e., points A and B are closer to the ends of their legs than are points E and C. This creates a moment in the legs when they have been set into sealing engagement before they are exposed to pressure and establishes an indirect load path which makes the seal less sensitive to variations in seal bore diameter, finished dimensions and thermal expansion and contraction. It further makes them open to the pressure so that it will further uniformly urge each leg into sealing engagement with its sealing surface as best shown in FIGURE 12.

## Claims

1. An annular sealing ring assembly (10,50,80) for sealing across the annular space between an external member (16) having an outer cylindrical surface (34) and an external member (18) having an inner cylindrical surface (36), the assembly comprising an annular metal seal ring (101) having an annular base (102) with a pair of spaced apart legs (104,106) extending from the annular base substantially in one direction and including a first leg and a second leg with an annular space between the legs; a plurality of segments (108) positioned in the annular space between the legs, the segments substantially filling the annular space between the legs; and means (54,56) for retaining the segments within the annular space between the legs; characterised in that the segments are arranged to transfer load between the legs, and the segments are all sufficiently short whereby they are not subject to hoop tension.

2. An assembly (10,50) according to claim 1, wherein the annular base (102) has a centreline (110), and the legs (104,106) extend from the edges of the annular base in a direction generally parallel to the centreline.

3. An assembly (80) according to claim 1, wherein the annular base (102) is cylindrical, and the legs extend generally perpendicularly from the edges of the annular base.

4. An assembly according to claim 1, including at least one groove (136,138) on the interior of the first leg (104), and at least one groove (148,150) on the exterior of the second leg (106).

5. An assembly according to claim 2, wherein the first leg (106) is positioned to extend slightly radially inward at an angle with respect to the annular base centreline (110) so that it provides an interference fit with the surface (36) against which it is to seal when it is installed thereon and so that it urges the segments (108) radially away from the first leg to move the second leg (104) radially into sealing engagement with the sealing surface (34) against which the second leg is to seal.

6. An assembly, according to claim 1, including a pair of the seal rings (101) assembled with their open ends in facing relationship to each other and with the segments (108) in each ring in engagement with the segments of the other ring.

7. An assembly comprising a first sealing ring assembly and a second sealing ring assembly each according to claim 1, the first sealing ring assembly (100) being positioned to have its legs (104,106) extending from their base (102) in a first axial direction, the second sealing ring assembly (100) having its legs (104,106) extending from their base (102) in a second axial direction which is towards the first sealing assembly, and a portion of the segments (108) in each of the sealing assemblies abutting the same portion of the segments of the other sealing assembly so that force on the sealing assemblies urges them toward each other and also urges their segments into the annular spaces between their legs.

8. An assembly according to claim 7, wherein the sealing ring assemblies (100) are positioned within a well and adapted to seal across an annulus between an inner cylindrical surface (36) of an outer well member (18) and an outer cylindrical surface (34) of an inner well member (16).

9. An assembly according to claim 8, including means (54,56) for urging the first and second sealing ring assemblies toward each other to ensure proper positioning of the segments (108) in the two sealing assemblies.

10. An assembly according to claim 8, including wedging means (32) on one of the well members (16,18) to wedge one of the legs toward the other leg so that the segments transmit the wedging force to the other leg to set it in sealing engagement with the surface of the member against which it is to seal.

11. An assembly (80) comprising a first sealing ring assembly and a second sealing ring assembly each according to claim 3, the first sealing ring assembly being positioned to have its legs extending from their base in a radial direction, the second sealing ring assembly having its legs extending from their base in a radial direction, and means for retaining the segments for each of the sealing ring assemblies in their desired positions between the legs of their sealing rings.

12. An assembly according to claim 11, wherein the segments of one of the sealing rings are in engagement with the segments of the other sealing ring to provide the retaining means.

13. An assembly according to claim 11, wherein the sealing ring of one of the sealing ring assemblies sharing the base with the other of the sealing ring of the sealing ring assemblies with the legs of each sealing ring extending from the edges of the base in opposite directions to the other sealing ring.

14. An assembly according to claim 11, wherein both sealing rings have their legs extending radially in the same direction as the legs of the other sealing ring.

15. An assembly according to claim 1, wherein the legs (104,106) of the metal sealing ring (100) each have inner points of contact (A,B) with the segments (108) positioned between the legs and points of contact (C,E) with their respective sealing surfaces (166,168), the points of contact (C,E) of each leg with its sealing surface being offset a greater distance from the end of the leg than the point of contact (A,B) with the segment to provide a moment in the legs which ensures that the sealing force between each of the legs and its sealing surface are balanced after loading both before and after the sealing ring assemblies are subjected to pressure.

## Patentansprüche

1. Eine ringförmige Dichtungsringanordnung (10, 50, 80) zum Abdichten quer zu dem Ringraum zwischen einem äußeren Teil (60) mit einer äußeren Zylinderfläche (34) und einem äußeren Teil (18) mit einer inneren Zylinderfläche (36), wobei die Anordnung umfaßt einen ringförmigen Metalldichtungsring (101), der eine ringförmige Basis (102) mit einem Paar beabstandeter Arme (104, 106) aufweist, die sich von der ringförmigen Basis im wesentlichen in eine Richtung erstrecken und einen ersten Arm und einen zweiten Arm mit einem Ringraum zwischen den Armen einschließen; eine Mehrzahl Segmente (108), die in dem Ringraum zwischen den Armen angeordnet sind, wobei die Segmente im wesentlichen den Ringraum zwischen den Armen füllen; und eine Einrichtung (54, 56) zum Halten der Segmente innerhalb des Ringraums zwischen den Armen, **dadurch gekennzeichnet,** daß die Segmente angeordnet sind, eine Last zwischen den Armen zu übertragen, und die Segmente alle ausreichend kurz sind, wodurch keiner Ringspannung ausgesetzt sind.

2. Eine Anordnung (10, 50) gemäß Anspruch 1, wobei die ringförmige Basis (102) eine Mittellinie (110) aufweist und sich die Arme (104, 106) von den Rändern der ringförmigen Basis in eine Richtung allgemein parallel zu der Mittellinie fortsetzen.

3. Eine Anordnung (80), gemäß Anspruch 1, wobei die ringförmige Basis (102) zylindrisch ist und sich die Arme allgemein senkrecht von den Rändern der ringförmigen Basis fortsetzen.

4. Eine Anordnung gemäß Anspruch 1, die wenigstens eine Nut (136,138) an dem Inneren des ersten Arms (104) und wenigstens eine Nut (148, 150) an dem äußeren des zweiten Arms (106) einschließt.

5. Eine Anordnung gemäß Anspruch 2, wobei der erste Arm (106) angeordnet ist, daß er sich etwas radial nach innen unter einem Winkel in bezug auf die ringförmige Basismittellinie (110) erstreckt, so daß er einen Preßsitz mit der Oberfläche (36) liefert, gegen die er abdichten soll, wenn er daran eingebaut ist, und daß er die Segmente (108) radial von dem ersten Arm fortdrückt, um den zweiten Arm (104) radial in Dichtungseingriff mit der Dichtungsfläche (34) zu bewegen, gegen die der zweite Arm abdichten soll.

6. Eine Anordnung gemäß Anspruch 1, die ein Paar Dichtungsringe (101) umfaßt, die mit ihren offenen Enden in einer zueinanderweisenden Beziehung und mit den Segmenten (108) in jedem Ring in Eingriff mit den Segmenten des anderen Rings montiert sind.

7. Eine Anordnung, die eine erste Dichtungsringanordnung und eine zweite Dichtungsringanordnung jeweils gemäß Anspruch 1 umfaßt, wobei die erste Dichtungsringanordnung (100) angeordnet ist, daß sich ihre Arme (104, 106) von ihrer Basis (102) in einer ersten, axialen Richtung erstrecken, sich die Arme (104, 106) der zweiten Dichtungsringanordnung (100) von ihrer Basis (102) in einer zweiten, axialen Richtung erstrecken, die in Richtung der ersten Dichtungsanordnung ist, und wobei ein Teil der Segmente (108) in jeder der Dichtungsanordnungen gegen den gleichen Teil der Segmente der anderen Dichtungsanordnung stößt, so daß eine Kraft an den Dichtungsanordnungen sie zu einander drückt und auch ihre Segmente in die Ringräume zwischen ihren Armen drückt.

8. Eine Anordnung gemäß Anspruch 7, wobei die Dichtungsringanordnungen (100) in einem Bohrloch angeordnet sind und einen Ring zwischen einer inneren, zylindrischen Fläche (36) eines äußeren Bohrlochteils (18) und einer äußeren, zylindrischen Fläche (34) eines inneren Bohrlochteils (16) abdichten.

9. Eine Anordnung gemäß Anspruch 8, die eine Einrichtung (54, 56) umfaßt, um die erste und die zweite Dichtungsringanordnung in Richtung zueinander zu drükken, um eine richtige Positionierung der Segmente (108) in den zwei Dichtungsanordnungen sicherzustellen.

10. Eine Anordnung gemäß Anspruch 8, die eine Verkeilungseinrichtung (32) an einem der Bohrlochteile (16, 18) umfaßt, um einen der Arme in Richtung zu dem anderen Arm zu verkeilen, so daß die Segmente, die Verkeilungskraft auf den anderen Arm übertragen, um ihn in Dichtungseingriff mit der Oberfläche des Teils einzustellen, gegen den er abdichten soll.

11. Eine Anordnung (80), die eine erste Dichtungsringanordnung und eine zweite Dichtungsringanordnung jeweils gemäß Anspruch 3 umfaßt, wobei die erste Dichtungsringanordnung angeordnet ist, daß sich ihre Arme von ihrer Basis in eine radiale Richtung erstrecken, sich die Arme der zweiten Dichtungsringanordnung von ihrer Basis in eine radiale Richtung erstrecken, und mit einer Einrichtung zum Halten der Segmente von jeder der Dichtungsanordnungen in ihren erwünschten Positionen zwischen den Armen ihrer Dichtungsringe.

12. Eine Anordnung gemäß Anspruch 11, wobei die Segmente von einem der Dichtungsringe in Eingriff mit den Segmenten des anderen Dichtungsrings sind, um eine Halteeinrichtung zu schaffen.

13. Eine Anordnung gemäß Anspruch 11, wobei der Dichtungsring einer der Dichtungsringanordnungen die Basis mit dem anderen Dichtungsring der Dichtungsringanordnungen gemeinsam benutzt, wobei sich die Arme bei jedem Dichtungsring von den Rändern der Basis in entgegengesetzte Richtungen zu dem anderen Dichtungsring erstrecken.

14. Eine Anordnung gemäß Anspruch 11, wobei sich die Arme beider Dichtungsringe radial in der gleichen Richtung wie die Arme des anderen Dichtungsrings erstrekken.

15. Eine Anordnung gemäß Anspruch 1, wobei die Arme (104, 106) des Metalldichtungsrings (100) jeweils innere Berührungspunkte (A, B) mit den Segmenten (108) aufweisen, die zwischen den Armen angeordnet sind, und Berührungspunkte (C, E) mit ihren entsprechenden Dichtungsflächen (166, 168), wobei die Berührungspunkte (C, E) von jedem Arm mit seiner Dichtungsfläche um eine größere Strecke von dem Ende des Arms versetzt ist als der Berührungspunkt (A, B) mit dem Segment, um ein Moment an den Armen vorzusehen, das sicherstellt, daß die Dichtungskraft zwischen jedem der Arme und seiner Dichtungsfläche nach der Belastung, sowohl bevor und nachdem die Dichtungsringanordnungen Druck ausgesetzt werden, ausgeglichen ist.

## Revendications

1. Assemblage de bague d'étanchéité annulaire (10, 50, 80) pour étancher l'espace annulaire entre un élément externe (16) ayant une surface cylindrique externe (34) et un élément externe (18) ayant une surface cylindrique interne (36), l'assemblage comprenant une bague d'étanchéité annulaire métallique (101) ayant une base annulaire (102) avec une paire de jambes espacées l'une de l'autre (104, 106) s'étendant à partir de la base annulaire sensiblement dans une direction et comprenant une première jambe et une deuxième jambe avec un espace annulaire entre les jambes ; une pluralité de segments (108) positionnés dans l'espace annulaire entre les jambes, les segments remplissant sensiblement l'espace annulaire entre les jambes ; et un moyen (54, 56) pour retenir les segments dans l'espace annulaire entre les jambes ; caractérisé en ce que les segments sont agencés pour transférer la charge entre les jambes, et les segments sont tous suffisamment courts de façon qu'ils ne soient pas soumis à une tension périphérique.

2. Assemblage (10, 50) selon la revendication 1, dans lequel la base annulaire (102) présente une ligne centrale (110), et les jambes (104, 106) s'étendent à partir des bords de la base annulaire dans une direction généralement parallèle à la ligne centrale.

3. Assemblage (80) selon la revendication 1, dans lequel la base annulaire (102) est cylindrique, et les jambes s'étendent généralement perpendiculairement à partir des bords de la base annulaire.

4. Assemblage selon la revendication 1, comprenant au moins une rainure (136, 138) sur l'intérieur de la première jambe (104), et au moins une rainure (148, 150) sur l'extérieur de la seconde jambe (106).

5. Assemblage selon la revendication 2, dans lequel la première jambe (106) est positionnée pour s'étendre légèrement radialement vers l'intérieur avec un angle par rapport à la ligne centrale (110) de la base annulaire, de façon qu'elle réalise un joint à ajustement serré avec la surface (36) contre laquelle elle doit réaliser l'étanchéité, lorsqu'elle est installée sur celle-ci, et de façon qu'elle pousse les segments (108) radialement à distance de la première jambe pour déplacer la seconde jambe (104) radialement en contact d'étanchéité avec la surface d'étanchéité (34) contre laquelle la seconde jambe doit réaliser l'étanchéité.

6. Assemblage selon la revendication 1, comprenant une paire de bagues d'étanchéité (101) assemblées avec leurs extrémités ouvertes se faisant face l'une l'autre et avec les segments (108) dans chaque bague en contact avec les segments de l'autre bague.

7. Assemblage comprenant un premier assemblage de bague d'étanchéité et un second assemblage de bague d'étanchéité, chacun selon la revendication 1, le premier assemblage de bague d'étanchéité (100) étant positionné pour avoir ses jambes (104, 106) s'étendant à partir de leur base (102) dans une première direction axiale, le second assemblage de bague d'étanchéité (100) ayant ses jambes (104, 106) s'étendant à partir de leur base (102) dans une seconde direction axiale qui est dirigée vers le premier assemblage d'étanchéité, et une portion des segments (108) dans chacun des assemblages d'étanchéité venant en butée contre la même portion des segments de l'autre assemblage d'étanchéité, de sorte qu'une force sur les assemblages d'étanchéité les pousse l'un vers l'autre et pousse également leurs segments dans les espaces annulaires entre leurs jambes.

8. Assemblage selon la revendication 7, dans lequel les assemblages de bagues d'étanchéité (100) sont positionnés dans un puits et adaptés pour étancher un espace annulaire entre une surface cylindrique interne (36) d'un élément de puits externe (18) et une surface cylindrique externe (34) d'un élément de puits interne (16).

9. Assemblage selon la revendication 8, comprenant un moyen (54, 56) pour pousser le premier et le second assemblages de bagues d'étanchéité l'un vers l'autre pour assurer un positionnement correct des segments (108) dans les deux assemblages d'étanchéité.

10. Assemblage selon la revendication 8, comprenant un moyen de coinçage (32) sur l'un des éléments de puits (16, 18) pour coincer l'une des jambes vers l'autre jambe de façon que les segments transmettent la force de coincement vers l'autre jambe pour l'installer en contact d'étanchéité avec la surface de l'élément contre lequel elle doit réaliser l'étanchéité.

11. Assemblage (80) comprenant un premier assemblage de bague d'étanchéité et un second assemblage de bague d'étanchéité, chacun selon la revendication 3, le premier assemblage de bague d'étanchéité étant positionné pour avoir ses jambes s'étendant à partir de leur base dans une direction radiale, le second assemblage de bague d'étanchéité ayant ses jambes s'étendant à partir de leur base dans une direction radiale, et un moyen pour retenir les segments pour chacun des assemblages de bagues d'étanchéité dans leurs positions désirées entre les jambes de leurs bagues d'étanchéité.

12. Assemblage selon la revendication 11, dans lequel les segments de l'une des bagues d'étanchéité sont en contact avec les segments de l'autre bague d'étanchéité pour constituer le moyen de retenue.

13. Assemblage selon la revendication 11, dans lequel la bague d'étanchéité de l'un des assemblages de bagues d'étanchéité partageant la base avec l'autre bague d'étanchéité des assemblages de bagues d'étanchéité, avec les jambes de chaque bague d'étanchéité s'étendant à partir des bords de la base dans des directions opposées à l'autre bague d'étanchéité.

14. Assemblage selon la revendication 11, dans lequel les deux bagues d'étanchéité ont leurs jambes s'étendant radialement dans la même direction que les jambes de l'autre bague d'étanchéité.

15. Assemblage selon la revendication 1, dans lequel les jambes (104, 106) de la bague d'étanchéité métallique (100) ont chacune des points de contact internes (A, B) avec les segments (108) positionnés entre les jambes et des points de contact (C, E) avec leurs surfaces d'étanchéité respectives (166, 168), les points de contact (C, E) de chaque jambe avec sa surface d'étanchéité étant décalés d'une distance supérieure à partir de l'extrémité de la jambe que le point de contact (A, B) avec le segment pour réaliser un moment dans les jambes qui assure que la force d'étanchéité entre chacune des jambes et sa surface d'étanchéité soit équilibrée après chargement à la fois avant et après que les assemblages de bagues d'étanchéité sont soumis à la pression.
